(19) **Europäisches Patentamt / European Patent Office / Office européen des brevets**

(11) **EP 3 367 580 B1**

(12) **EUROPEAN PATENT SPECIFICATION**

(45) Date of publication and mention of the grant of the patent:
**28.08.2019 Bulletin 2019/35**

(51) Int Cl.:
*H04B 3/23* (2006.01)   *H04M 3/30* (2006.01)
*H04M 11/06* (2006.01)

(21) Application number: **17158402.2**

(22) Date of filing: **28.02.2017**

(54) **TRANSMISSION ARRANGEMENT FOR FULL-DUPLEX COMMUNICATION**

GETRIEBEANORDNUNG FÜR VOLLDUPLEXKOMMUNIKATION

AGENCEMENT DE TRANSMISSION POUR LA COMMUNICATION EN DUPLEX INTÉGRAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.08.2018 Bulletin 2018/35**

(73) Proprietor: **Nokia Solutions and Networks Oy 02610 Espoo (FI)**

(72) Inventors:
• **TYTGAT, Maarten**
  **Murray Hill, NJ 07974-0636 (US)**
• **GURNE, Thibaut**
  **2018 Antwerpen (BE)**
• **STRACKX, Maarten**
  **2018 Antwerpen (BE)**

(74) Representative: **Nokia EPO representatives Nokia Technologies Oy Karaportti 3 02610 Espoo (FI)**

(56) References cited:
**US-A1- 2003 142 688   US-A1- 2003 169 875**

EP 3 367 580 B1

**Description**

**Technical Field of the Invention**

The present invention relates to echo suppression for full-duplex communication systems.

**Technical Background of the invention**

Discrete Multi-Tone (DMT) communication paradigm combined with full-duplex transmission (all carriers are simultaneously used for both directions of communication) has proven to be particularly successful for achieving record-breaking transmission rates over copper medium, such as Unshielded Twisted Pairs (UTP) or TV broadcast coaxial cables.

Still, full-duplex is particularly challenging as new impairments arise, such as the undesired transmit echo signal that leaks into the useful receive signal.

With Time Division Duplexing (TDD, such as in use in G.fast), the transmitter is not active when the receiver is listening, so echo is definitively not an issue. Yet, with Frequency Division Duplexing (FDD, such as in use in xDSL or DOCSIS), and even more with full-duplex transmission, the transmitter and the receiver are active at the same time, and one has to come up with a solution to efficiently suppress the undesired echo signal from the receive signal.

As a first solution, the transmitter differential output and the receiver differential input are connected to the transmission line through a so-called hybrid network. The hybrid network is designed to subtract the current transmit voltage from the current line voltage at the receiver input, typically by means of hybrid coils or some resistive network.

This solution, combined with analog filtering in the receiver front-end to separate the receive signal from the echo signal, was adequate for legacy ADSL or DOCSIS communication systems where downstream and upstream communications were assigned the upper and lower parts of the spectrum with clear separation band in-between.

With the introduction of VDSL2 and its numerous transmission profiles and intertwined downstream and upstream frequency bands, analog filtering was no longer a viable option. The introduction of the cyclic suffix in addition to the cyclic prefix allows to properly align the downstream and upstream DMT symbols at both sides of the transmission line, and thus to preserve the mutual orthogonality between the downstream and upstream carriers, meaning the transmit echo signal no longer interferes with the receive signal. Although there is still some degradation of the quantification noise when an echo signal is present at the ADC input, the dynamic range and quantification depth of the ADCs was constantly improving, and with as much as 25dB as isolation, the current hybrid designs were good enough to guarantee acceptable data rates.

That is another story with full-duplex: as the same carriers are simultaneously used in both directions of communication, the echo signal directly affects the reception and is thus perceived as additional background noise.

Furthermore, the hybrid is only designed to suppress the immediate transmit voltage, and the various delayed reflections of the transmit signal arising from impedance mismatches along the loop or cable plant (bridged tap, passive couplers, etc) and echoing back into the receiver through the receive path cannot be distinguished from the useful receive signal and therefore cannot be suppressed by the hybrid network.

Therefore the hybrid network is to be complemented with further echo suppression techniques in order to reduce that extra background noise and to achieve higher data throughputs.

For instance, one could further process the receive samples in the digital domain through an echo cancellation filter in order to cancel the residual echo signal.

Still for instance, one could combine the digital and analog approaches. The residual echo channel through the hybrid is estimated by means of some probing signals, and the residual echo signal is re-generated in the digital domain from the transmit samples, converted in the analog domain by means of an additional Digital to Analog Converter (DAC), and subtracted from the receive signal in the analog domain so as to get an almost echo-free signal at the input of the ADC. So the analog hybrid removes most of the direct echo signal, and the additional DAC kicks in to remove the residual echo due to imperfect echo cancellation in the hybrid and the various delayed echoes that cannot be suppressed by the hybrid.

Yet, there is still some residual echo left on account of the non-linear nature of the line driver. These nonlinearities or distortions can hardly be predicted in the digital domain but with complex channel models and tracking algorithms. There is thus a need for improving the hybrid design so as to get the best echo suppression in the analog domain.

The following background art, which may be regarded as useful for understanding the present invention and its relationship to the prior art, is further acknowledged and briefly discussed.

The us patent entitled *"Power Efficient Line Driver with High Performance Echo Cancellation for 1000BASE-T",* published on July 31, 2003 with publication number US 2003/0142688 A1, discloses a 1000BASE-T transceiver linked to an unshielded twisted pair (UTP) through a transformer currently transmits and receives outgoing and incoming signals via the UTP. The transceiver employs an energy efficient class B or AB line driver supplying asymmetric output currents to the transformer's primary winding terminals so that the transformer's secondary winding induces the outgoing signal on the UTP. Resistors couple the transformer's primary winding terminals to inputs of separate amplifiers producing a differential output signal mimicking the incoming 1000BASE-T signal. Since both the incoming and outgoing signals contribute to voltages appearing at the transformer's primary winding terminals, echo cancellation circuits provide additional compensating signals to the amplifier inputs for can-celing echo in each amplifier input due to the resistive and reactive loading on each driver output current and arising from the asymmetric nature of the class B or AB driver's output currents.

The US patent entitled *"on-chip Compensation Scheme For Bridged Tap Lines in ADSL Hybrid"*, published on September 11, 2003 with publication number US 2003/0169875 A1, discloses a modem generally comprising an analog front end circuit, a hybrid circuit, and a variable impedance element. The hybrid circuit may be configured to couple the analog front end circuit to a transmission line. The variable impedance may be disposed within the analog front end circuit and connected to the hybrid circuit to trim an echo cancelling function of the hybrid circuit.

**Summary of the Invention**

It is an object of the present invention to propose a new hybrid design that is able to operate across a wider frequency range with low insertion loss for the transmit and receive signals and high isolation between the transmit and receive ports, proper line matching, low added noise, and at lowest possible cost, power consumption and size.

In accordance with a particular aspect of the invention, a new transmission arrangement is proposed for coupling a pair of transmit output terminals to a pair of medium terminals coupled a transmission medium, and the pair of medium terminals to a pair of receive input terminals, the pairs of transmit output terminals, receive input terminals and medium terminals carrying opposite-polarity signals. The transmission arrangement comprises a first adder and a second adder with respective first and second adder input terminals and respective adder output terminals. The pair of transmit output terminals is coupled to the pair of first adder input terminals, and is further coupled through respective first impedances to the pair of second adder input terminals and to the pair of medium terminals, with the first and second adder input terminals being respectively coupled to opposite-polarity transmit output terminals. The pair of receive input terminals is coupled to the pair of adder output terminals. The first impedances individually comprise a first resistor coupled in parallel with a first capacitor. The first and second adders individually comprise second and third capacitors between the respective first and second adder input terminals and a common terminal, and a feedback network between the adder output terminal and the common terminal. The first capacitors have a reactance value that matches the difference between the reactance values of the second and third capacitors.

In one embodiment of the invention, the first resistors are matching resistors whose resistance value is determined for an input impedance of the transmission arrangement to match a characteristic impedance of the transmission medium.

In one embodiment of the invention, the transmission arrangement further comprises an adjustment circuit for dynamically adjusting the resistance value of the first resistors.

In one embodiment of the invention, the first and second adders individually comprise, as feedback network, a fourth capacitor coupled between the adder output terminal and the common terminal.

In one embodiment of the invention, the first and second adders further individually comprise a third adder input terminal, and a fifth capacitor between the third adder input terminal and the common terminal. A further pair of transmit output terminals configured to output a differential echo cancellation signal is coupled to the pair of third adder input terminals.

In one embodiment of the invention, the first and second adders further individually comprise a high-gain differential amplifier with a pair of amplifier input terminals, the inverting terminal of which being coupled to the common terminal, and an amplifier output terminal coupled to the adder output terminal.

In one embodiment of the invention, the first and second adders form part of a receiver differential amplifier with a pair of amplifier input terminals coupled to the pair of common terminals, and a pair of amplifier output terminals coupled to the pair of adder output terminals.

Such a transmission arrangement is typically embedded within an Integrated Circuit (IC), and further forms part of an access node (or access concentrator), such as a Cable Modem Termination System (CMTS), a Distribution Point Unit (DPU), a Digital Subscriber Line Access Multiplexer (DSLAM), or a wireless base station (eNodeB, Wifi access point, etc), or forms part of a subscriber device, such as a modem, a switch, a router, or a user terminal (laptop, smart phone, etc).

So far, transformer-based or resistor-based circuits have been proposed for the design of hybrid networks. Transformer-based hybrids make use of transformers wired in such a way to achieve high isolation between certain ports and low insertion loss between other ports. To operate over large communication bandwidths, line transformers are often used. These circuits currently only exist as discrete components and are rather bulky ($> 1 \text{ mm}^3$). Trying to integrate these components on an IC would drastically reduce performance (loss, bandwidth, etc). Resistor-based hybrids, which have been demonstrated as discrete or on-chip solutions, can provide similar isolation and loss as transformer-based hybrids. However, resistors generate thermal noise, and their various contributions to the total receive noise power may not be negligible when the hybrid is operated over a wide frequency range (e.g., 1.2 GHz). This directly translates into a lower Signal to Noise Ratio (SNR) at the receiver, and hence a lower achievable data rate.

A new hybrid design is proposed (capacitive hybrid hereinafter). The new design includes two adders. Each adder is equipped with two signal input terminals for picking up respective shares of two opposite-polarity transmit voltages across a matching resistor, and another (as-high-as-possible) share of a receive voltage. Capacitors with low capacitance values are provisioned in series along the two input branches of the adder to sink little current from the main current driving the transmission line and to guarantee low insertion loss for the transmit signal. Another capacitor is added in parallel with the matching resistor in order to compensate for the phase shift difference through the two input capacitors and thus to achieve perfect echo cancellation at the common sinking terminal of the adder. And still another capacitor is added in the feedback loop of the adder to control the receive gain and make it frequency-independent. Inherently, these capacitors do not generate thermal noise and thus greatly improve the receiver SNR.

The matching resistor, which is the only remaining resistive component in the capacitive hybrid generating noise, has a resistance value for the input impedance of the hybrid as seen through the line terminals to match a nominal characteristic impedance of the transmission medium, typically 75Ω for a coaxial cable and 100Ω for a twisted copper pair, taking duly account of the winding ratio of the line transformer.

The value of the matching resistor can be dynamically adjusted by means of an adjustment circuit to fit the real part of the actual characteristic impedance of the transmission medium and to minimize the return loss.

**Brief Description of the Drawings**

The above and other objects and features of the invention will become more apparent and the invention itself will be best understood by referring to the following description of an embodiment taken in conjunction with the accompanying drawings wherein:

- fig. 1 represents an overview of a transceiver;
- fig. 2 represents a first embodiment of a transmission arrangement as per the present invention;
- fig. 3A and 3B represent portions of this transmission arrangement for circuit analysis;
- fig. 4 represents a second alternative embodiment of a transmission arrangement as per the present invention; and
- fig. 5A to 5C represent various performance plots of a transmission arrangement as per the present invention.

**Detailed Description of the Invention**

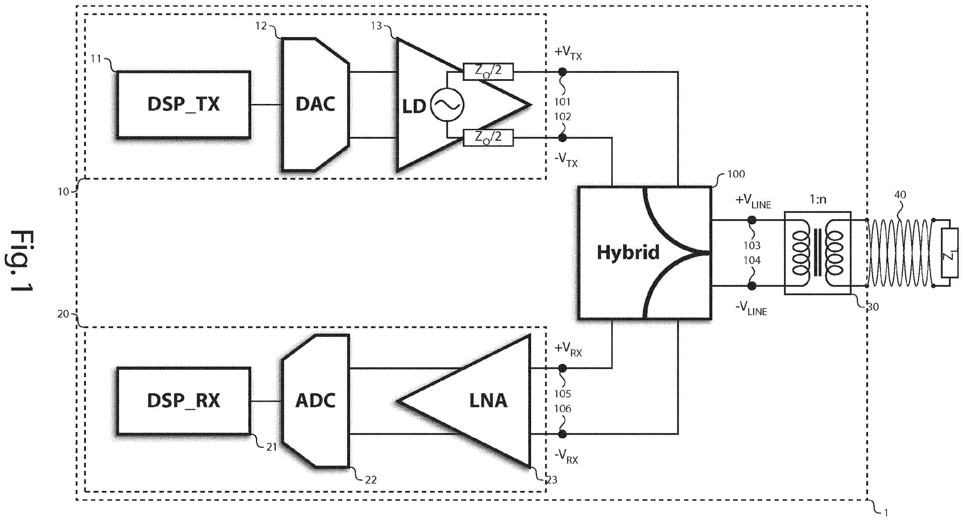

There is seen in fig. 1 a communication unit 1 for communication over a wired transmission medium with one or more peer communication units. The communication unit 1 typically forms part of an access node or a CPE.

The communication unit 1 uses Discrete Multi-Tone (DMT) modulation over closely-spaced orthogonal carriers (a.k.a. tones or bins), and operates in full-duplex mode, that is to say the same carriers are simultaneously used for both downstream (towards the subscriber premises) and upstream (from the subscriber premises) communications. Thus, the aggregate capacity is doubled when compared to legacy techniques, such as FDD used for DOCSIS or xDSL communications, or TDD used for G.fast communications.

The communication unit 1 comprises a transmitter 10 with two differential transmit output terminals 101 and 102 carrying opposite-polarity transmit voltages $+V_{TX}$ and $-V_{TX}$, and a receiver 20 with two differential receive input terminals 105 and 106 carrying opposite-polarity receive voltages $+V_{RX}$ and $-V_{RX}$. The communication unit 1 further comprises a hybrid 100 coupled to the two transmit output terminals 101 and 102 and to the two receive input terminals 105 and 106, and further coupled to two line terminals 103 and 104 carrying opposite-polarity line voltages $+V_{LINE}$ and $-V_{LINE}$. The line terminals 105 and 106 are further coupled to a transmission medium through a line transformer 30 for DC-isolating the communication unit 1 from the transmission medium.

Presently, the transmission medium is depicted as an Unshielded Twisted Pair (UTP) 40, although the present invention is similarly applicable to other transmission media, such as TV broadcast coaxial cables. The transmission line 40 is terminated with a load impedance $Z_L$.

The line voltages $+V_{LINE}$ and $-V_{LINE}$ encompass both respective transmit line voltages $+V_{LINE\_TX}$ and $-V_{LINE\_TX}$ on account of the transmit voltages $+V_{TX}$ and $-V_{TX}$ being applied over the transmit output terminals 101 and 102, and respective receive line voltages $+V_{LINE\_RX}$ and $-V_{LINE\_RX}$ on account of a transmit voltage being remotely applied over the transmission line 40 in the reverse direction by a peer communication unit.

The hybrid 100 is configured to pass the differential transmit voltage present on the two transmit output terminals 101 and 102 towards the line terminals 103 and 104 and the differential receive voltage present on the line terminals 103 and 104 towards the receive input terminals 105 and 106 with low insertion loss, while achieving high isolation between the transmit output terminals 101 and 102 and the receive input terminals 105 and 106.

The following relations hold:

$$\pm \mathbf{V}_{LINE\_TX}(j\omega)=\pm\boldsymbol{\alpha}(j\omega)\mathbf{V}_{TX}(j\omega) \quad (1),$$

$$\pm \mathbf{V}_{RX}(j\omega)=\pm\boldsymbol{\beta}(j\omega)\mathbf{V}_{LINE\_RX}(j\omega)\pm\boldsymbol{\gamma}(j\omega)\mathbf{V}_{TX}(j\omega) \quad (2),$$

wherein the boldfaced voltages denote the respective frequency-dependent complex phasors of the respective voltage signals, $\alpha(j\omega)$ and $\beta(j\omega)$ denote the frequency-dependent complex insertion gains for the transmit and receive signals respectively, and $\gamma(j\omega)$ denotes the frequency-dependent complex isolation gain for the echo signal.

For proper echo cancellation, the hybrid shall be designed in such a way that:

$$|\boldsymbol{\gamma}(j\omega)| \ll |\boldsymbol{\beta}(j\omega)| \frac{V_{RMS\_LINE\_RX}}{V_{RMS\_TX}} \quad (3),$$

while keeping the insertion losses through the hybrid as low as possible. $V_{RMS\_TX}$ and $V_{RMS\_LINE\_RX}$ respectively denote the Root Mean Square (RMS) value of the transmit output voltage $V_{TX}$ at the output terminals 101 and 102 of the transmitter 10 and the RMS value of the receive line voltage $V_{LINE\_RX}$ at the line terminals 103 and 104.

The transmitter 10 and the receiver 20 comprise an analog part and a digital part.

The transmit analog part comprises a Digital-to-Analog Converter 12 (or DAC), and a line driver 13 for amplifying the transmit signal and for driving the transmission line 40. The line driver 13 has Zo as output impedance, which output impedance being evenly balanced between the two output terminals 101 and 102.

The receive analog part comprises a Low-Noise Amplifier 23 (or LNA) for amplifying the receive signal with as little noise as possible, and an Analog-to-Digital Converter 22 (or ADC).

Some further analog components may be present along the transmit or receive analog path. For instance, the communication unit 1 may further include protection circuitry for protecting against any current or voltage surge occurring over the transmission line 40. Still for instance, the communication unit 1 may further comprise additional amplification stages along the receive path.

The digital part is configured to operate downstream and upstream communication channels for conveying user and control traffic over the transmission line 40.

The digital part comprises a transmit digital part 11 for encoding and modulating user and control data into DMT symbols, and a receive digital part 21 for demodulating and decoding user and control data from DMT symbols.

The following transmit steps are typically performed in the transmit digital part 11:

- data encoding, such as data multiplexing, framing, scrambling, error correction encoding and interleaving;
- signal modulation, comprising the steps of ordering the carriers according to a carrier ordering table, parsing the encoded bit stream according to the bit loadings of the ordered carriers, and mapping each chunk of bits onto an appropriate transmit constellation point (with respective carrier amplitude and phase), possibly with Trellis coding;
- signal scaling;
- possibly, joint signal precoding for crosstalk mitigation,
- Inverse Fast Fourier Transform (IFFT);
- Cyclic Extension (CE) insertion; and possibly
- time-windowing.

The transmit digital part 11 supplies the cyclically-extended digital time samples to the DAC 12 for further analog conversion.

The way around, the ADC 22 supplies the digital time samples of the amplified receive signal to the receive digital part 21 for the following receive steps to be performed:

- CE removal, and possibly time-windowing;
- Fast Fourier Transform (FFT);
- Frequency EQualization (FEQ);
- possibly, joint signal postcoding for crosstalk and/or echo mitigation,
- signal demodulation and detection, comprising the steps of applying to each and every equalized frequency sample an appropriate constellation grid, the pattern of which depends on the respective carrier bit loading, detecting the expected transmit constellation point and the corresponding transmit binary sequence encoded therewith, possibly with Trellis decoding, and reordering all the detected chunks of bits according to the carrier ordering table; and

- data decoding, such as data de-interleaving, error correction, de-scrambling, frame delineation and demultiplexing.

Some of these transmit or receive steps can be omitted, or some additional steps can be present, depending on the exact digital communication technology being used.

The transmit digital part 11 and the receive digital part 21 are typically implemented by means of one or more processors. A processor should not be construed to refer exclusively to hardware capable of executing software, and may implicitly include, without limitation, Digital Signal Processor (DSP), Application Specific Integrated Circuit (ASIC), Field Programmable Gate Array (FPGA), etc. Other conventional and/or custom hardware, such as Random Access Memory (RAM), non volatile storage, may also be included.

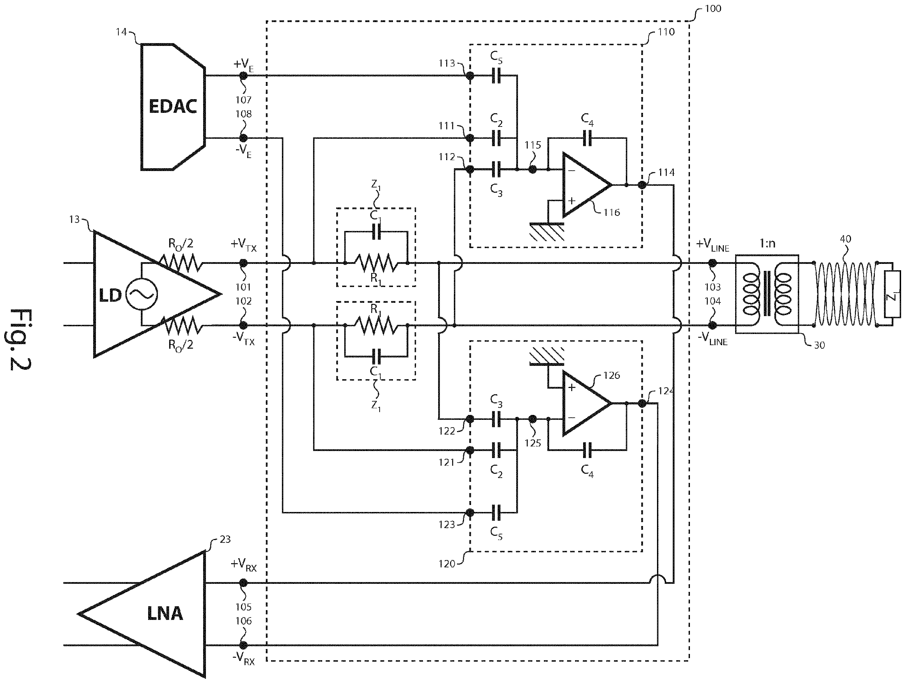

There is seen in fig. 2 a first advantageous embodiment of the hybrid 100.

The hybrid 100 is a fully-balanced transmission arrangement comprising a first adder 110 and a second adder 120. The first adder comprises input terminals 111 and 112, an output terminal 114, and an op-amp 116. And the second adder 120 similarly comprises input terminals 121 and 122, an output terminal 124, and an op-amp 126.

The first transmit output terminal 101 is coupled to a first terminal of a first impedance and to the first input terminal 111 of the first adder 110. The second terminal of the first impedance is coupled to the line terminal 103 and to the second input terminal 122 of the second adder 120. Symmetrically, the second transmit output terminal 102 is coupled to a first terminal of a second impedance and to the first input terminal 121 of the second adder 120. The second terminal of the second impedance is coupled to the line terminal 104 and to the second input terminal 112 of the first adder 110. The first and second impedances have a common value $Z_1$, and comprise a resistor R1 in parallel with a capacitor C1. The output terminals 114 and 124 of the first adder 110 and the second adder 120 are coupled to the respective receive input terminals 105 and 106.

The input terminals 111 and 112 of the first adder 110 are coupled to the inverting terminal of the op-amp 116 through respective capacitors C2 and C3, the inverting terminal of the op-amp 116 acting as a common terminal 115 of the first adder 110. The output terminal 114 of the first adder 110 is looped back to the common terminal 115 through a capacitor C4. The non-inverting terminal of the op-amp 116 is grounded. Symmetrically, the input terminals 121 and 122 of the second adder 120 are coupled to the inverting terminal of the op-amp 126 through respective capacitors C2 and C3, the inverting terminal of the op-amp 126 acting as a common terminal 125 of the second adder 120. The output terminal 124 of the first adder 120 is coupled to the common terminal 125 through a capacitor C4. The non-inverting terminal of the op-amp 126 is grounded.

As aforementioned, the hybrid is designed to subtract the current transmit voltage from the current line voltage, and is thus unable to cope with the delayed signal reflections arising from impedance mismatches along the loop or cable plant (bridged tap, passive couplers, etc) and echoing back into the receiver along the receive path. For adequate echo suppression, these various echo residues need to be estimated, re-generated in the digital domain, converted in the analog domain by means of an additional DAC, and subtracted from the line signal in the analog domain.

The first adder 110 and second adder 120 then accommodate respective third input terminals 113 and 123 coupled to respective differential output terminals 107 and 108 carrying opposite-polarity echo cancellation voltages $+V_E$ and $-V_E$ generated by an additional DAC 14 (or EDAC). The third input terminals 113 and 123 are coupled to the respective common terminals 115 and 125 through a capacitor C5.

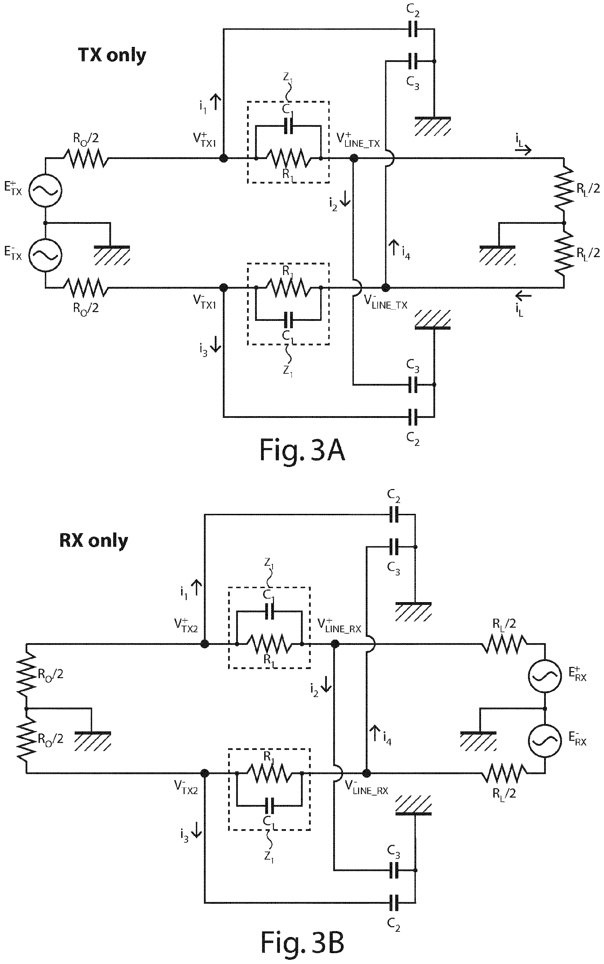

The transmission arrangement will now be analyzed with regard to fig 3A and 3B.

As any linear circuit, the transmission arrangement as per fig. 2 can be analyzed by means of the superposition principle so as to de-correlate transmission from reception. We will first assume that the transmit output terminals 101 and 102 are fed with a differential transmit voltage $\pm V_{TX}$ only and that no transmit voltage is applied at the far-end of the transmission line 40, meaning no receive voltages $\pm V_{LINE\_RX}$ is present on the line terminals 103 and 104, such as depicted in fig. 3A (TX only). Next, we will assume that a transmit voltage is applied at the far-end of the transmission line 40, yielding a differential receive voltage $\pm V_{LINE\_RX}$ over the line terminals 103 and 104 produced by the transformer emf, and that no transmit voltage $\pm V_{TX}$ is applied on the transmit output terminals 101 and 102, such as depicted in fig. 3B (RX only).

There is seen in fig. 3A the various impedances loading the transmitter output, assuming 1:1 as winding ratio for the line transformer.

The transmitter is modeled as two opposite-polarity ideal voltage generators $E_{TX}^{\pm}$ having a common ground terminal with $E_{TX}^{-} = -E_{TX}^{+}$ **,** and coupled in series with two respective output resistors $R_O/2$. Let further assume that the impedance of the transmission line as seen through the line terminals 103 and 104 consists of two load resistors $R_L/2$ between the respective terminals 103 and 104 and the ground.

Assuming that the inverting terminals of the op-amp 116 and 126 are maintained to a virtual ground voltage on account of the negative feedback, the transmitter output is loaded with a total impedance $\mathbf{Z}_{TX}$ given by:

$$\frac{\mathbf{Z}_{TX}}{2} \equiv \mathbf{Z}_2 \Big\| \left[ \mathbf{Z}_1 + \left( \mathbf{Z}_3 \Big\| \frac{R_L}{2} \right) \right] \quad (4),$$

with:

$$\mathbf{Z}_1 \equiv R_1 \| C_1 = \frac{R_1}{1 + j\,\omega\,C_1\,R_1} \quad (5),$$

$$\mathbf{Z}_2 = \frac{1}{j\,\omega\,C_2} \quad (6),$$

and

$$\mathbf{Z}_3 = \frac{1}{j\,\omega\,C_3} \quad (7).$$

Let $\mathbf{V}_{TX1}^{\pm}$ denote the voltages appearing at the transmit output terminals 101 and 102 when no voltage is being received from the line. We then have:

$$\mathbf{V}_{TX1}^{\pm} = \frac{\mathbf{Z}_{TX}}{\mathbf{Z}_{TX} + R_0} \mathbf{E}_{TX}^{\pm} \quad (8),$$

and

$$\mathbf{V}_{LINE\_TX}^{\pm} = \frac{\mathbf{Z}_4}{\mathbf{Z}_4 + \mathbf{Z}_1} \mathbf{V}_{TX1}^{\pm} = \left( \frac{\mathbf{Z}_4}{\mathbf{Z}_4 + \mathbf{Z}_1} \right) \left( \frac{\mathbf{Z}_{TX}}{\mathbf{Z}_{TX} + R_0} \right) \mathbf{E}_{TX}^{\pm} \quad (9),$$

wherein:

$$\mathbf{Z}_4 \equiv \frac{R_L}{2} \| C_3 = \frac{\dfrac{R_L}{2}}{1 + j\,\omega\,C_3\,\dfrac{R_L}{2}} = \frac{R_L}{2 + j\,\omega\,C_3\,R_L} \quad (10).$$

The hybrid insertion loss for the transmit signal is thus given by:

$$\alpha = \frac{\mathbf{Z}_4}{\mathbf{Z}_4 + \mathbf{Z}_1} \quad (11).$$

In order to get a low insertion loss for the transmit signal, one has to select a relatively small value for $C_3$ for $|Z4| \gg |Z1|$ and $|\alpha| \simeq 1$.

As depicted in fig. 3A, let $i_1$ and $i_3$ denote the currents entering the first input terminals of the adders 110 and 120 respectively, and let $i_4$ and $i_2$ denote the current entering the second input terminals of the adders 110 and 120 respectively. Let $i_L$ denote the current through the load $R_L$.

As the circuit is fully balanced, we have opposite currents circulating in the symmetric counterpart branches of the circuit, and:

$$i_1 = -i_3 \text{ and } i_2 = -i_4 \quad (12).$$

In order to get adequate echo suppression, the following relation shall hold:

$$i_1 = -i_4 \text{ and } i_2 = -i_3 \quad (13),$$

so as when a given current enters the common terminal through the first input terminal of the adder, then an equivalent current leaves the common terminal through the second input terminal of the adder, and vice-versa.

With regard to eq. (12), we then have:

$$i_1 = i_2 = -i_3 = -i_4 \quad (14).$$

We further have:

$$\mathbf{V}_{TX1}^{+} = \frac{\mathbf{I}_1}{j\omega C_2} \quad (15),$$

$$\mathbf{V}_{LINE\_TX}^{+} = \frac{\mathbf{I}_2}{j\omega C_3} = \frac{\mathbf{I}_1}{j\omega C_3} \quad (16)$$

$$\mathbf{V}_{TX1}^{-} = \frac{\mathbf{I}_3}{j\omega C_2} = -\frac{\mathbf{I}_1}{j\omega C_2} \quad (17),$$

and

$$\mathbf{V}_{LINE\_TX}^{-} = \frac{\mathbf{I}_4}{j\omega C_3} = -\frac{\mathbf{I}_1}{j\omega C_3} \quad (18).$$

Applying Kirchoff's current law to the node $\mathbf{V}_{LINE\_TX}^{+}$ :

$$\frac{\mathbf{V}_{TX1}^{+} - \mathbf{V}_{LINE\_TX}^{+}}{\mathbf{Z}_1} = \mathbf{I}_2 + \frac{\mathbf{V}_{LINE\_TX}^{+} - \mathbf{V}_{LINE\_TX}^{-}}{R_L} \quad ,$$

or, with further regard to eq. (15) through (18):

$$\frac{\mathbf{I}_1}{\mathbf{Z}_1}\left(\frac{1}{j\omega C_2} - \frac{1}{j\omega C_3}\right) = \mathbf{I}_1 + \frac{\mathbf{I}_1}{R_L}\left(\frac{1}{j\omega C_3} + \frac{1}{j\omega C_3}\right) \quad ,$$

yielding:

$$\frac{1}{\mathbf{Z}_1}\left(\frac{1}{j\omega C_2} - \frac{1}{j\omega C_3}\right) = 1 + \frac{1}{R_L}\left(\frac{2}{j\omega C_3}\right) \quad ,$$

or

$$\frac{1}{\mathbf{Z}_1}=\frac{1}{R_1}+j\,\omega\,C_1=\frac{1+\dfrac{1}{R_L}\left(\dfrac{2}{j\,\omega\,C_3}\right)}{\left(\dfrac{1}{j\,\omega\,C_2}-\dfrac{1}{j\,\omega\,C_3}\right)}=\frac{2}{R_L\,C_3}\left(\dfrac{1}{\dfrac{1}{C_2}-\dfrac{1}{C_3}}\right)+j\,\omega\left(\dfrac{1}{\dfrac{1}{C_2}-\dfrac{1}{C_3}}\right)\quad(19).$$

If we equate the real and imaginary parts of eq. (19) with the real and imaginary parts of $1/\mathbf{Z}_1$, then the following two relations shall be adhered to for adequate echo suppression:

$$\frac{1}{C_1}=\frac{1}{C_2}-\frac{1}{C_3}\quad(20),$$

and

$$\frac{1}{R_1}=\frac{2}{R_L\,C_3}\left(\frac{1}{\dfrac{1}{C_2}-\dfrac{1}{C_3}}\right)=\frac{2\,C_1}{R_L\,C_3}\quad(21).$$

There is seen in fig. 3B the various impedances loading the transmission line when a far-end signal is being received through the line terminals 103 and 104, still assuming 1:1 as winding ratio for the line transformer.

The line is modeled as two opposite-polarity ideal voltage generators $\mathbf{E}_{RX}^{\pm}$ having a common ground terminal with $\mathbf{E}_{RX}^{-}=-\mathbf{E}_{RX}^{+}$, and coupled in series with two respective output resistors $R_L/2$.

Still assuming that the inverting terminals of the op-amp 116 and 126 are maintained to a virtual ground voltage on account of the negative feedback, the transmission line 40 is loaded with a total impedance $\mathbf{Z}_{RX}$ given by:

$$\frac{\mathbf{Z}_{RX}}{2}\equiv\mathbf{Z}_3\|\left[\mathbf{Z}_1+\left(\mathbf{Z}_2\|\frac{R_o}{2}\right)\right]\quad(22).$$

Let $\mathbf{V}_{LINE\_RX}^{\pm}$, resp. $\mathbf{V}_{TX2}^{\pm}$, denote the voltages produced by the transformer emf at the line terminals 103 and 104, resp. the voltages appearing at the transmit output terminals 101 and 102, when a voltage is being remotely applied over the line and no transmit voltage is being inserted by the transmitter. We then have:

$$\mathbf{V}_{LINE\_RX}^{\pm}=\frac{\mathbf{Z}_{RX}}{\mathbf{Z}_{RX}+R_L}\mathbf{E}_{RX}^{\pm}\quad(23),$$

and

$$\mathbf{V}_{TX2}^{\pm}=\mathbf{Z}_5\left(\frac{2}{\mathbf{Z}_{RX}}-\frac{1}{\mathbf{Z}_3}\right)\mathbf{V}_{LINE\_RX}^{\pm}=\frac{\mathbf{Z}_5}{\mathbf{Z}_1+\mathbf{Z}_5}\,\mathbf{V}_{LINE\_RX}^{\pm}\quad(24),$$

wherein:

$$\mathbf{Z}_5\equiv\frac{R_o}{2}\|C_2=\frac{\dfrac{R_o}{2}}{1+j\,\omega\,C_2\dfrac{R_o}{2}}=\frac{R_o}{2+j\,\omega\,C_2\,R_o}\quad(25).$$

The differential receive voltages at the receive input terminal 105 and 106 are then given by:

$$\mathbf{V}_{RX}^{\pm}=-\frac{1}{j\,\omega\,C_4}\left(j\,\omega\,C_3\mathbf{V}_{LINE\_RX}^{\mp}+j\,\omega\,C_2\frac{\mathbf{Z}_5}{\mathbf{Z}_1+\mathbf{Z}_5}\mathbf{V}_{LINE\_RX}^{\pm}\right)$$
$$=\frac{1}{C_4}\left(C_3-C_2\frac{\mathbf{Z}_5}{\mathbf{Z}_1+\mathbf{Z}_5}\right)\mathbf{V}_{LINE\_RX}^{\pm} \qquad (26),$$

and the hybrid insertion loss for the receive signal is given by:

$$\beta=\frac{1}{C_4}\left(C_3-C_2\frac{\mathbf{Z}_5}{\mathbf{Z}_1+\mathbf{Z}_5}\right)\approx\frac{C_3}{C_4} \quad (27),$$

which in approximation is simply the gain of the adder when the hybrid losses are neglected.

For optimal power transfer from the transmission line into the receiver and minimal signal reflection at the line terminals, the resistance value of the matching resistor Ri is determined so as the real part of the input impedance $\mathbf{Z}_{RX}$ matches the real part of the characteristic impedance $\mathbf{Z}_C$ of the transmission line. If the impedance values $C_1$, $C_2$ and $C_3$ are chosen sufficiently small for the input currents $i_1$ to $i_4$ to be low enough with respect to the main load current $i_L$ (assumption valid at low/mid-frequencies at least), then this requirement translates into:

$$R_1 = R_L/2n^2 - R_0/2 \quad (28),$$

assuming 1:n as winding ratio for the line transformer.

The reactance value of the capacitor $C_1$ shall substantially match the difference between the reactance value of the first input branch of one adder and the reactance value of the second input branch of the other adder, namely $1/C_2$ - $1/C_3$, so as there are antiphase input currents at the common terminal of the adders.

As aforementioned, the capacitance value of the capacitor $C_3$ shall be chosen sufficiently small in order to have the lowest insertion loss for the transmit signal. In addition, the chosen capacitance value shall substantially match eq. (21), which is possible as eq. (20) and (21) leave some degree of freedom for selecting a capacitance value for the capacitor $C_2$.

The capacitance value of the capacitor $C_4$ determines the receive gain across the opamps 116 and 126 as per eq. (27).

The capacitance value of the capacitor $C_5$ determines the insertion gain of the echo cancellation voltage $\mathbf{V}_E^{\pm}$.

For instance, the following values can be used with a load resistance $R_L$ = 75$\Omega$ (coaxial cable), a generator output resistance $R_O$ = 22$\Omega$, and 1:1 as winding ratio for the line transformer:

- $R_1$ = 26,5$\Omega$;
- $C_3$ = 1pF;
- $C_2$ = 0,5858pF;
- $C_1$ = 1,414pF.

The resistor $R_1$ can be replaced by a tunable resistor. This allows to calibrate $R_1$ by a limited amount so as to compensate for uncertainties or deviations on the line driver output impedance $Z_O$ or on the average line characteristic impedance $Z_C$. Thanks to the integration with the digital backend, this calibration can be done automatically.

For instance, the variable resistor can be implemented as a MOSFET in the linear region in parallel with another resistor. The gate voltage on the MOSFET determines the resistance between its source and drain. Capacitors are added between the body and the source, and between the source and the gate, of the MOSFET to prevent large voltages in AC across the MOSFET terminals.

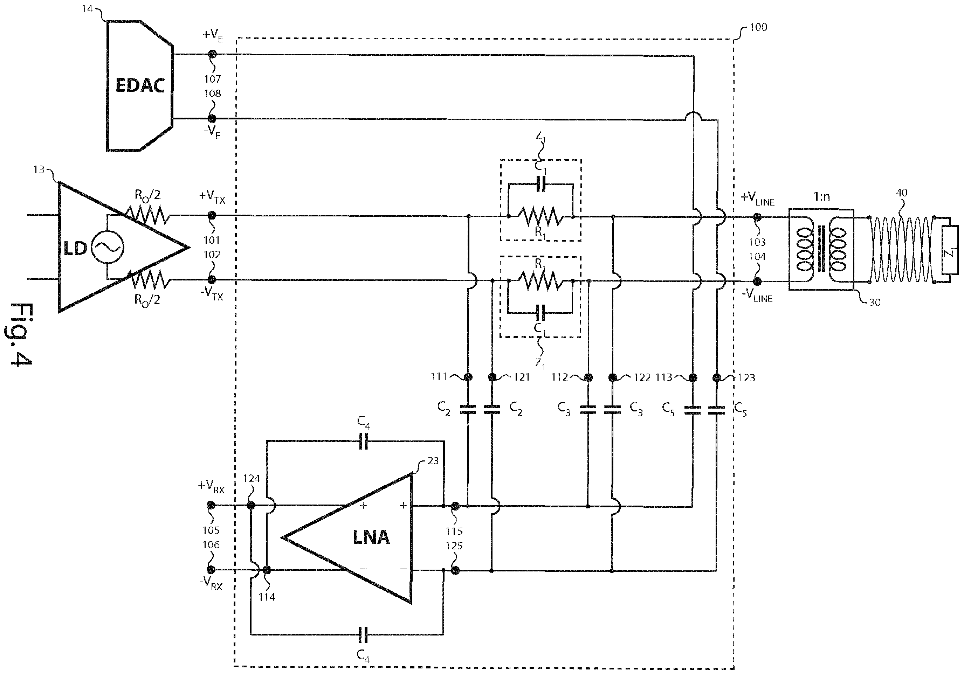

There is seen in fig. 4 a second alternative embodiment of the hybrid 100.

This embodiment differs from the first embodiment in that the two adders 110 and 120 are implemented by means of the existing LNA 23 for reduced cost and size.

The common terminals of the adders are coupled to the input terminals of the LNA 23, and the output terminals of the adders are coupled to the respective opposite-polarity output terminals of the LNA 23. Presently, the common terminal 115 of the first adder 110 is coupled to the non-inverting input terminal of the LNA 23, and the output terminal 114 of the first adder 110 is coupled to the inverting output terminal of the LNA 23, and as feedback loop to the common terminal 115 of the first adder 110 through the capacitor C4. Symmetrically, the common terminal 125 of the second adder 120 is coupled to the inverting input terminal of the LNA 23, and the output terminal 124 of the second adder 120 is coupled to the non-inverting output terminal of the LNA 23, and as feedback loop to the common terminal 125 of the second adder 120 through the capacitor C4.

The remainder of the transmission arrangement 100 is left unmodified.

The proposed transmission arrangement has a smaller footprint, and can be integrated within an IC. The capacitance values needed are compatible with the newest CMOS processes. In fact, smaller capacitors are beneficial since they allow more wideband operation. Furthermore, implementing small capacitor values is more accurate on an IC than in discrete components on a board.

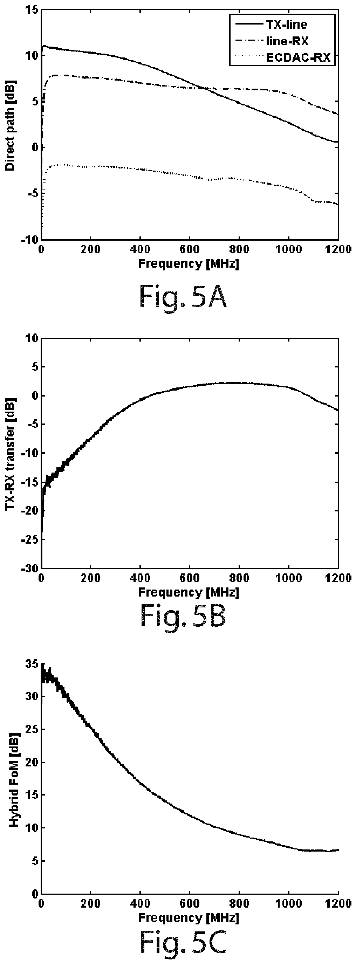

There is seen in fig. 5A to 5C various performance plots for a hybrid as per the present invention.

Fig. 5A represents the various insertion gains through the capacitive hybrid versus frequency. The transmit insertion gain from the DAC output ports up to the line terminals, and including the line driver gain, is depicted as a plain-line curve (TX-line). The receive insertion gain from the line terminals up to the ADC input ports, and including the LNA gain, is depicted as a dashed-line curve (line-RX). And last, the insertion gain of the additional echo cancellation signal from the output ports of the additional DAC up to the ADC input ports is depicted as a dotted-line curve (ECDAC-RX). As one can see, the frequency response of the hybrid is relatively flat across the 1 GHz frequency range.

Fig. 5B plot represents the Trans-Hybrid Return Loss (THRL) versus frequency, that is to say the isolation gain from the DAC output ports up to the near-end ADC input ports, including both the line driver gain and the LNA gain.

Fig. 5C plot represents the Figure of Merit (FoM), which is a more representative metric for the hybrid than the THRL. The mean FoM is about 21 dB, which a very good performance figure for such a wide frequency range (up to 1,2 GHz).

The FoM is computed from the gains TX-line and line-RX and from the THRL as follows (with gains expressed in dB):

$$\text{gain(TX-line)} = \text{gain(LD)} + \text{gain(HTX-line)} \quad (29),$$

$$\text{gain(line-RX)} = \text{gain(line-HRX)} + \text{gain(LNA)} \quad (30),$$

and

$$\text{THRL} = \text{gain(TX-RX)} = \text{gain(LD)} + \text{gain(HTX-HRX)} + \text{gain(LNA)} \quad (31),$$

wherein HTX and HRX respectively denote the transmit output ports and the receive input ports of the hybrid.

FOM is then given by:

$$\text{FOM} = \text{gain(TX-line)} + \text{gain(line-RX)} - \text{THRL} = \text{gain(HTX-line)} + \text{gain(line-HRX)} - \text{gain(HTX-HRX)} \quad (32).$$

For instance at low frequencies, and based upon the plots 5A and 5B, FoM $\simeq$ 11 + 8 - (-18) $\simeq$ 37dB.

Simulations of a resistive hybrid compared to a capacitive hybrid (with ideal amplifiers, meaning no noise generated inside the amplifiers) show that the resistive hybrid produces a noise PSD of -154dBm/Hz at the receiver input, while the proposed capacitive hybrid produces a noise PSD of only -167dBm/Hz. In the resistive hybrid, the resistors in the input branches and the feedback loop dominate the noise contribution. The noise contribution of the matching resistor $R_1$, which is also present in the capacitive hybrid, is far lower. If the ADC noise floor is about -140dBm/Hz, the addition of a noise PSD of -154dBm/Hz results in an increase of 0,17dB of the noise PSD. However, if an LNA with a gain of 10dB is used after the resistive hybrid, the increase in the noise PSD is 1,46dB, which is rather substantial. With the proposed capacitive hybrid, and still assuming an LNA gain of 10dB, the increase in the noise PSD is only 0,09dB.

Although the above embodiments mostly focus on wired transmissions, the present invention is similarly applicable to wireless full-duplex transmission. In this case, the transmitter output and the receiver input are coupled through the proposed transmission arrangement 100 to a transmission medium, typically a coaxial cable, carrying the transmit and receive voltages to/from one or more antennas for EM propagation over the air. The transceiver typically accommodates additional circuitries such as up-down frequency mixer, further MIMO signal processing for path diversity, etc. The transmission arrangement 100 would then form part of a wireless base station or access point, or of a wireless user terminal, such as a smart phone, a laptop, and so forth.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. **A transmission arrangement** (100) for coupling **a pair of transmit output terminals** (101, 102) to **a pair of medium terminals** (103, 104) coupled to **a transmission medium** (40), and the pair of medium terminals to **a pair of receive input terminals** (105, 106), the pairs of transmit output terminals, receive input terminals and medium terminals carrying opposite-polarity signals ($\pm V_{TX}$; $\pm V_{RX}$; $\pm V_{LINE}$), **characterised in that** the transmission arrangement comprises **a first adder** (110) and **a second adder** (120) with respective **first and second adder input terminals** (111, 121; 112, 122) and respective **adder output terminals** (114; 124),
   *wherein* the pair of transmit output terminals is coupled to the pair of first adder input terminals, and is further coupled through respective **first impedances** ($Z_1$) to the pair of second adder input terminals and to the pair of medium terminals, with the first and second adder input terminals being respectively coupled to opposite-polarity transmit output terminals, and the pair of receive input terminals is coupled to the pair of adder output terminals, *wherein* the first impedances individually comprise **a first resistor** ($R_1$) coupled in parallel with **a first capacitor** ($C_1$),
   *wherein* the first and second adders individually comprise **second and third capacitors** ($C_2$, $C_3$) between the respective first and second adder input terminals and **a common terminal** (115; 125), and **a feedback network** between the adder output terminal and the common terminal,
   *and wherein* the first capacitors have a reactance value that matches the difference between the reactance values of the second and third capacitors.

2. **A transmission arrangement** (100) according to claim *1, wherein* the first resistors are matching resistors whose resistance value is determined for **an input impedance** of the transmission arrangement to match **a characteristic impedance** of the transmission medium.

3. **A transmission arrangement** (100) according to claim 2, *wherein* the transmission arrangement further comprises **an adjustment circuit** for dynamically adjusting the resistance value of the first resistors.

4. **A transmission arrangement** (100) according to claim *1, wherein* the first and second adders individually comprise, as feedback network, **a fourth capacitor** ($C_4$) coupled between the adder output terminal and the common terminal.

5. **A transmission arrangement** (100) according to claim *1, wherein* the first and second adders further individually comprise **a third adder input terminal** (113; 123), and **a fifth capacitor** ($C_5$) between the third adder input terminal and the common terminal,
   *and wherein* **a further pair of transmit output terminals** (107, 108) configured to output **a differential echo cancellation signal** ($\pm V_E$) is coupled to the pair of third adder input terminals.

6. **A transmission arrangement** (100) according to claim 1, *wherein* the first and second adders further individually comprise **a high-gain differential amplifier** (116; 126) with a pair of amplifier input terminals, the inverting terminal of which being coupled to the common terminal, and an amplifier output terminal coupled to the adder output terminal.

7. **A transmission arrangement** (100) according to claim 1, *wherein* the first and second adders form part of **a receiver differential amplifier** (23) with a pair of amplifier input terminals coupled to the pair of common terminals, and a pair of amplifier output terminals coupled to the pair of adder output terminals.

8. **An integrated circuit** comprising **a transmission arrangement** (100) according to any of claims 1 to 7.

9. **An access node** comprising **a transmission arrangement** (100) according to any of claims 1 to 7.

10. **An access node** according to claim 9, *wherein* the access node is **a Cable Modem Termination System CMTS**, and the transmission medium is **a coaxial cable.**

11. **An access node** according to claim 9, *wherein* the access node is **a Distribution Point Unit DPU**, and the transmission medium is **a twisted copper pair.**

12. **An access node** according to claim 9, *wherein* the access node is **a Digital Subscriber Line Access Multiplexer DSLAM**, and the transmission medium is **a twisted copper pair.**

13. **An access node** according to claim 9, *wherein* the access node is **a wireless base station**, and the transmission medium is coupled to one or more antennas for signal transmission and reception over the air.

14. **A subscriber device** comprising **a transmission arrangement** (100) according to any of claims 1 to 7.

**Patentansprüche**

1. **Übertragungsanordnung** (100), um **ein Paar Sendeausgangsanschlüsse** (101, 102) an **ein Paar Mediumanschlüsse** (103, 104), die an **ein Übertragungsmedium** (40) gekoppelt sind, und um das Paar Mediumanschlüsse an **ein Paar Empfangseingangsanschlüsse** (105, 106) zu koppeln, wobei die Paare Sendeausgangsanschlüsse, Empfangseingangsanschlüsse und Mediumanschlüsse Signale ($\pm V_{TX}$; $\pm V_{RX}$; $\pm V_{LINE}$) entgegengesetzter Polarität führen,
**dadurch gekennzeichnet, dass**
die Übertragungsanordnung **einen ersten Addierer** (110) und **einen zweiten Addierer** (120) mit entsprechenden **ersten und zweiten Addierereingangsanschlüssen** (111, 121; 112, 122) und entsprechenden **Addiererausgangsanschlüssen** (114; 124) umfasst,
wobei das Paar Sendeausgangsanschlüsse an das Paar erster Addierereingangsanschlüsse gekoppelt ist und ferner über entsprechende **erste Impedanzen** ($Z_1$) an das Paar zweiter Addierereingangsanschlüsse und an das Paar Mediumanschlüsse gekoppelt ist, wobei die ersten und die zweiten Addierereingangsanschlüsse entsprechend an Sendeausgangsanschlüsse entgegengesetzter Polarität gekoppelt sind und das Paar Empfangseingangsanschlüsse an das Paar Addiererausgangsanschlüsse gekoppelt ist,
die ersten Impedanzen einzeln **einen ersten Widerstand** ($R_1$), der mit **einem ersten Kondensator** ($C_1$) parallelgeschaltet ist, umfassen,
der erste und der zweite Addierer einzeln einen **zweiten und einen dritten Kondensator** ($C_2$, $C_3$) zwischen den ersten und den **zweiten Addierereingangsanschlüssen und einem** gemeinsamen Anschluss (115; 125) und **ein Rückkopplungsnetz** zwischen dem Addiererausgangsanschluss und dem gemeinsamen Anschluss umfassen und die ersten Kondensatoren einen Reaktanzwert besitzen, der mit der Differenz zwischen den Reaktanzwerten des zweiten und des dritten Kondensators übereinstimmt.

2. **Übertragungsanordnung** (100) nach Anspruch 1, wobei die ersten Widerstände übereinstimmende Widerstände sind, deren Widerstandswert derart bestimmt ist, dass **eine Eingangsimpedanz** der Übertragungsanordnung mit **einem Wellenwiderstand** des Übertragungsmediums übereinstimmt.

3. **Übertragungsanordnung** (100) nach Anspruch 2, wobei die Übertragungsanordnung ferner eine **Einstellschaltung** zum dynamischen Einstellen des Widerstandswerts der ersten Widerstände umfasst.

4. **Übertragungsanordnung** (100) nach Anspruch 1, wobei der erste und der zweite Addierer einzeln als Rückkopplungsnetz **einen vierten Kondensator** ($C_4$), der zwischen einen Addiererausgangsanschluss und den gemeinsamen Anschluss gekoppelt ist, umfassen.

5. **Übertragungsanordnung** (100) nach Anspruch 1, wobei der erste und der zweite Addierer ferner einzeln **einen dritten Addierereingangsanschluss** (113; 123) und **einen fünften Kondensator** ($C_5$) zwischen dem dritten Addierereingangsanschluss und dem gemeinsamen Anschluss umfassen, und

   **ein weiteres Paar Sendeausgangsanschlüsse** (107, 108), das konfiguriert ist, **ein Differenzechounterdrückungssignal** ($\pm V_E$) auszugeben, an das Paar dritter Addierereingangsanschlüsse gekoppelt ist.

6. **Übertragungsanordnung** (100) nach Anspruch 1, wobei der erste und der zweite Addierer ferner einzeln **einen Differenzverstärker** (116; 126) **mit hoher Verstärkung** mit einem Paar Verstärkereingangsanschlüsse, dessen invertierender Anschluss an den gemeinsamen Anschluss gekoppelt ist, und einem Verstärkerausgangsanschluss, der an den Addiererausgangsanschluss gekoppelt ist, umfassen.

7. **Übertragungsanordnung** (100) nach Anspruch 1, wobei der erste und der zweite Addierer einen Teil **eines Empfängerdifferenzverstärkers** (23) mit einem Paar Verstärkereingangsanschlüsse, das an das Paar gemeinsamer Anschlüsse gekoppelt ist, und einem Paar Verstärkerausgangsanschlüsse, das an das Paar Addiererausgangsanschlüsse gekoppelt ist, bilden.

8. **Integrierte Schaltung**, die **eine Übertragungsanordnung** (100) nach einem der Ansprüche 1 bis 7 umfasst.

9. **Zugangsknoten,** der **eine Übertragungsanordnung** (100) nach einem der Ansprüche 1 bis 7 umfasst.

10. **Zugangsknoten** nach Anspruch 9, wobei der Zugangsknoten **ein Kabelmodemabschlusssystem, CMTS**, ist und das Sendemedium ein **Koaxialkabel** ist.

11. **Zugangsknoten** nach Anspruch 9, wobei der Zugangsknoten **eine Verteilerstelleneinheit, DPU**, ist und das Übertragungsmedium **ein verdrilltes Doppelkupferkabel** ist.

12. **Zugangsknoten** nach Anspruch 9, wobei der Zugangsknoten ein Zugangsmultiplexer **einer digitalen Teilnehmerleitung, DSLAM**, ist und das Übertragungsmedium **ein verdrilltes Doppelkupferkabel** ist.

13. **Zugangsknoten** nach Anspruch 9, wobei der Zugangsknoten **eine drahtlose Basisstation** ist und das Übertragungsmedium an eine oder mehrere Antennen zum Senden von Signalen und zum Empfang von Signalen über den Äther umfasst.

14. **Teilnehmereinrichtung**, die **eine Übertragungsanordnung** (100) nach einem der Ansprüche 1 bis 7 umfasst.

**Revendications**

1. Agencement de transmission (100) destiné à coupler une paire de bornes de sortie de transmission (101, 102) à une paire de bornes de support (103, 104) couplée à un support de transmission (40), et

   la paire de bornes de support à une paire de bornes d'entrée de réception (105, 106), les paires de bornes de sortie de transmission, bornes d'entrée de réception et bornes de support portant des signaux de polarité opposée ($\pm V_{Tx}$ ; $\pm V_{Rx}$ ; $\pm V_{LINE}$),

   **caractérisé en ce que**

   l'agencement de transmission comprend un premier additionneur (110) et un second additionneur (120) ayant des première et deuxième bornes d'entrée d'additionneur respectives (111, 121 ; 112, 122) et des bornes de sortie d'additionneur respectives (114 ; 124),

   dans lequel la paire de bornes de sortie de transmission est couplée à la paire de premières bornes d'entrée d'additionneur, et est couplée en outre par le biais de premières impédances respectives (Z1) à la paire de secondes bornes d'entrée d'additionneur et à la paire de bornes de support, les première et deuxième bornes d'entrée d'additionneur étant couplées respectivement à des bornes de sortie de transmission de polarité opposée, et la paire de bornes d'entrée de réception est couplée à la paire de bornes de sortie d'additionneur,

   dans lequel les premières impédances comprennent individuellement une première résistance ($R_1$) couplée en parallèle avec un premier condensateur ($C_1$),

   dans lequel les premier et second additionneurs comprennent individuellement des deuxième et troisième condensateurs ($C_2$, $C_3$) entre les première et deuxième bornes d'entrée d'additionneur respectives et une borne commune (115 ; 125), et un réseau de rétroaction entre la borne de sortie d'additionneur et la borne commune, et dans lequel les premiers condensateurs ont une valeur de réactance qui correspond à la différence entre les valeurs de réactance des deuxième et troisième condensateurs.

2. Agencement de transmission (100) selon la revendication 1, dans lequel les premières résistances sont des résistances d'adaptation dont la valeur de résistance est déterminée pour qu'une impédance d'entrée de l'agencement de transmission soit adaptée à une impédance caractéristique du support de transmission.

3. Agencement de transmission (100) selon la revendication 2, dans lequel l'agencement de transmission comprend en outre un circuit d'ajustement pour ajuster dynamiquement la valeur de résistance des premières résistances.

4. Agencement de transmission (100) selon la revendication 1, dans lequel les premier et second additionneurs comprennent individuellement, comme réseau de rétroaction, un quatrième condensateur ($C_4$) couplé entre la borne de sortie d'additionneur et la borne commune.

5. Agencement de transmission (100) selon la revendication 1, dans lequel les premier et second additionneurs comprennent individuellement en outre une troisième borne d'entrée d'additionneur (113 ; 123), et un cinquième condensateur (Cs) entre la troisième borne d'entrée d'additionneur et la borne commune,
et dans lequel une autre paire de bornes de sortie de transmission (107, 108) configurée pour produire en sortie un signal de suppression d'écho différentiel (±VE) est couplée à la paire de troisièmes bornes d'entrée d'additionneur.

6. Agencement de transmission (100) selon la revendication 1, dans lequel les premier et second additionneurs comprennent individuellement en outre un amplificateur de différentiel à gain élevé (116 ; 126) présentant une paire de bornes d'entrée d'amplificateur, dont la borne inverseuse est couplée à la borne commune, et une borne de sortie d'amplificateur couplée à la borne de sortie d'additionneur.

7. Agencement de transmission (100) selon la revendication 1, dans lequel les premier et second additionneurs font partie d'un amplificateur différentiel de récepteur (23) présentant une paire de bornes d'entrée d'amplificateur couplée à la paire de bornes communes, et une paire de bornes de sortie d'amplificateur couplée à la paire de bornes de sortie d'additionneur.

8. Circuit intégré comprenant un agencement de transmission (100) selon l'une quelconque des revendications 1 à 7.

9. Noeud d'accès comprenant un agencement de transmission (100) selon l'une quelconque des revendications 1 à 7.

10. Noeud d'accès selon la revendication 9, le noeud d'accès étant un système de terminaison de modem câble CMTS, et le support de transmission étant un câble coaxial.

11. Noeud d'accès selon la revendication 9, le noeud d'accès étant une unité de point de distribution DPU, et le support de transmission étant une paire de fils de cuivre torsadés.

12. Noeud d'accès selon la revendication 9, le noeud d'accès étant un multiplexeur d'accès de ligne d'abonné numérique DSLAM, et le support de transmission étant une paire de fils de cuivre torsadés.

13. Noeud d'accès selon la revendication 9, le noeud d'accès étant une station de base sans fil, et le support de transmission étant couplé à une ou plusieurs antennes pour la transmission et la réception de signaux par liaison radio.

14. Dispositif d'abonné comprenant un agencement de transmission (100) selon l'une quelconque des revendications 1 à 7.

Fig. 1

Fig. 2

Fig. 3A

Fig. 3B

Fig. 4

Fig. 5A

Fig. 5B

Fig. 5C

**EP 3 367 580 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030142688 A1
- US 20030169875 A1